# FASCICULE DE BREVET EUROPEEN

(11) **EP 0 532 404 B1**
(45) Date de publication et mention de la délivrance du brevet: **17.05.1995**
(21) Numéro de dépôt: 92402451.6
(22) Date de dépôt: 08.09.1992
(51) Int. Cl.: G01N 35/10, B01L 3/02

(54) **Installation pour effectuer plusieurs réactions chimiques successives dans un même récipient**
Vorrichtung zur Durchführung von mehreren sukzessiver chemischen Reaktionen im selben Behälter
Apparatus for performing several succesive reactions in the same container

(30) Priorité: 10.09.1991 FR 9111144
(43) Date de publication de la demande: 17.03.1993
(73) Titulaire: COGEMA COMPAGNIE GENERALE DES MATIERES NUCLEAIRES, F-78141 Velizy-Villacoublay (FR)
(72) Inventeur: Ringot, Gilbert, F-50460 Querqueville (FR); Digard, Pierre, F-50110 Tourlaville (FR)
(74) Mandataire: Dubois-Chabert, Guy

(56) Documents cités:
- FR-A- 2 561 385
- US-A- 3 501 064
- US-A- 3 866 476
- PATENT ABSTRACTS OF JAPAN vol. 4, no. 131 (P-27)(613) 13 Septembre 1980
- PATENT ABSTRACTS OF JAPAN vol. 7, no. 231 (P-229)(1376) 13 Octobre 1983

## Description

L'invention concerne une installation conçue pour effectuer plusieurs réactions chimiques successives à l'intérieur d'un même récipient.

Une telle installation peut être utilisée dans de nombreux cas, notamment lorsqu'on désire automatiser une succession de réactions chimiques, afin, par exemple, de réaliser le dosage d'un produit. Ainsi, l'installation selon l'invention peut être utilisée pour effectuer de façon automatisée le dosage de l'uranium en présence de plutonium et de produits de fission, en phase aqueuse ou organique, selon la méthode de Davies et Gray.

Lorsque plusieurs réactions chimiques doivent être effectuées successivement dans un même récipient, on peut envisager de déplacer ce récipient entre des postes successifs au niveau desquels sont introduits des produits différents. Cependant, cela peut conduire à donner à l'installation un encombrement important si le nombre de réactions chimiques mises en jeu est élevé. De plus, le bon déroulement des réactions peut être incompatible avec un déplacement du récipient entre l'introduction successive de deux produits dans celui-ci. En outre, cette solution pose le problème de l'agitation des produits et surtout du contrôle du bon déroulement des différentes réactions.

Une autre solution (illustrée notamment par le document FR-A-2 561 385, voir préambule de la revendication 1) consiste à faire arriver tous les produits au même endroit afin d'effectuer l'ensemble des réactions chimiques sans déplacer le récipient. Les problèmes de l'encombrement, de l'agitation et du contrôle du bon déroulement des réactions sont ainsi résolus.

Cependant, cette dernière solution conduit à placer l'extrémité de chacun des tubes de distribution des différents produits et réactifs au-dessus du récipient. Cela peut avoir pour conséquence qu'une goutte d'un produit, et notamment d'un réactif, tombe dans le récipient à contre temps du déroulement des différentes réactions. Cela n'est évidemment pas acceptable puisque les résultats peuvent être totalement faussés, notamment lorsqu'on effectue le dosage d'un produit.

Le document US-A-3 501 064, qui concerne un échantillonneur destiné à prélever des échantillons liquides par aspiration dans des récipients, propose de monter cet échantillonneur sur un bras basculant. En position haute, la chute accidentelle d'une goutte de produit est empêchée par la forme du bec de l'échantillonneur.

Par ailleurs, quelle que soit la technique utilisée, le problème posé par le rinçage et la vidange du récipient lorsque toutes les opérations sont terminées est également difficile à résoudre.

L'invention a précisément pour objet une installation dans laquelle plusieurs réactions chimiques peuvent être mises en oeuvre successivement à l'intérieur d'un même récipient sans déplacer ce dernier et sans qu'une goutte de produit et notamment de réactif ne risque de tomber accidentellement dans le récipient à contre temps du déroulement des réactions.

Conformément à l'invention, ce résultat est obtenu au moyen d'une installation conforme à la revendication 1.

Dans une installation ainsi conçue, le ou les tubes qui se déplacent latéralement afin de ne pas être placés au-dessus du récipient lorsqu'ils sont en position haute sont choisis en fonction des produits qu'ils véhiculent, afin que tous les réactifs risquant de perturber le déroulement des réactions chimiques ne puissent en aucun cas chuter accidentellement dans le récipient à contre temps du déroulement de ces réactions.

Dans un mode de réalisation préféré de l'invention, le premier tube comporte une partie droite d'axe vertical, apte à coulisser et à tourner dans un support, l'extrémité inférieure de ce premier tube étant décalée par rapport audit axe vertical, et les moyens formant came comprenant des moyens pour faire pivoter le premier tube autour dudit axe vertical. De préférence, les moyens pour faire pivoter le premier tube comprennent alors un doigt solidaire de la partie droite de ce dernier, reçu dans une fente incurvée formée dans le support.

Par ailleurs, les tubes d'arrivée de produits comprennent avantageusement un tube d'amenée de liquide de rinçage et de vidange du récipient, comportant à son extrémité inférieure une rampe en forme de h dont une branche courte dérivée pénètre dans le récipient et dont une branche longue rectiligne, extérieure au récipient, comporte un rétrécissement en dessous du raccordement de la branche courte.

L'installation comprend également, de préférence, une électrode verticale de contrôle des réactions chimiques, agencée en faisceau avec les tubes et sur laquelle agissent également les moyens de commande.

En outre, un agitateur électromagnétique est placé avantageusement sous le récipient, un barreau magnétique présentant de préférence une section triangulaire étant placé dans un logement circulaire formé dans le fond du récipient.

Afin que la même succession de réactions chimiques puisse être effectuée successivement dans plusieurs récipients, l'installation peut aussi comprendre des moyens de défilement permettant de présenter à tour de rôle plusieurs récipients à un poste de travail, au-dessus duquel se trouvent les extrémités inférieures des tubes. Ces moyens de défilement peuvent notamment comprendre un plateau horizontal muni d'alvéoles de réception des récipients, régulièrement réparties autour d'un axe vertical, et des moyens d'entraînement permettant de faire tourner séquentiellement le plateau autour de son axe lorsque les réactions chimiques successives sont terminées pour un récipient donné.

Les réactions chimiques successives sont effectuées automatiquement grâce à l'intervention d'une centrale de gestion qui pilote notamment les moyens de commande et des moyens pour distribuer les produits à l'intérieur des tubes.

Lorsque le ou les produits mis en oeuvre le nécessitent, le récipient est placé dans une enceinte de confinement étanche dont une paroi supérieure est munie d'une plaque que traversent de façon étanche les tubes d'arrivée de produits, cette plaque supportant une potence porte-récipient à l'intérieur de l'enceinte et les moyens de commande à l'extérieur de l'enceinte.

On décrira à présent un mode de réalisation préféré de l'invention, en se référant aux dessins annexés, dans lesquels :
- la figure 1 est un schéma de principe illustrant de façon très schématique une installation réalisée conformément à l'invention, appliquée au dosage automatique de l'uranium selon la méthode de Davies et Gray ;
- la figure 2 est une vue en coupe verticale partielle illustrant de façon très schématique l'installation selon l'invention ;
- la figure 3 est une vue de côté, en coupe verticale, illustrant plus en détail la partie mécanique de l'installation selon l'invention ;
- la figure 4 est une vue de dessus de la partie mécanique illustrée sur la figure 3 ; et
- la figure 5 est une vue en coupe selon la ligne V-V de la figure 3.

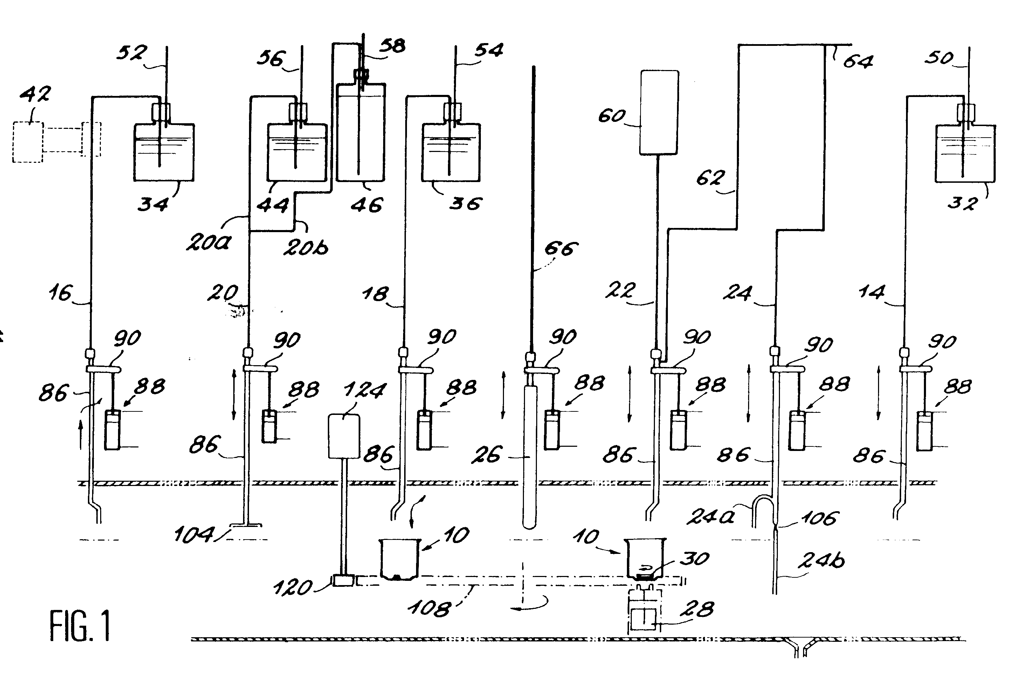

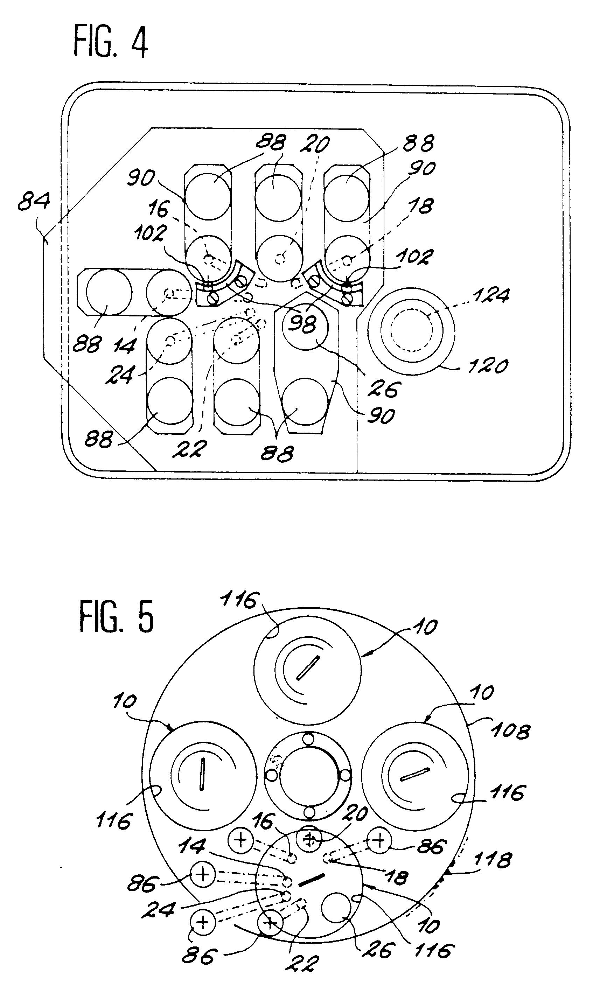

Dans le mode de réalisation illustré sur les figures 1 à 5, l'installation selon l'invention est appliquée au dosage de l'uranium, en présence de plutonium et de produits de fission, en phase aqueuse ou organique, selon la méthode de Davies et Gray. Comme on l'a déjà mentionné, cette application ne doit pas être considérée comme limitative de la portée de l'invention, celle-ci pouvant être utilisée à chaque fois que plusieurs réactions chimiques doivent être effectuées successivement à l'intérieur d'un même récipient, notamment mais non exclusivement pour y réaliser un dosage.

Dans l'application de l'invention au dosage de l'uranium, les solutions échantillonnées à doser sont placées dans des récipients tels que des béchers 10, qui se trouvent à l'intérieur d'une enceinte de confinement 12 étanche et blindée. Afin que le dosage puisse être réalisé, chacun des béchers 10 doit être amené à tour de rôle en face d'un poste de travail au-dessus duquel débouchent plusieurs tubes 14,16,18,22 d'arrivée de produits, un tube 24 d'amenée de liquide de rinçage et de vidange du bécher et un tube 20 d'amenée d'un mélange de dilution. Ce poste de travail est également équipé d'une électrode de mesure 26 permettant de contrôler l'évolution des réactions qui se produisent dans le bécher et d'un agitateur électromagnétique 28. Dans le mode de réalisation représenté, ces différents éléments permettent de réaliser au poste de travail le dosage de l'uranium selon la méthode de Davies et Gray, en effectuant des opérations successives qui vont à présent être décrites brièvement.

Dans un premier temps, l'opérateur introduit manuellement dans le bécher 10, non encore placé au poste de travail, l'échantillon à doser, contenant 50 à 200 mg d'uranium, ainsi que trois gouttes de bichromate de potassium à 2 % et 5 cm³ d'acide nitrique 1N.

Le bécher est ensuite placé au poste de travail, dans lequel les opérations suivantes sont effectuées à tour de rôle :
- introduction de 5 cm³ d'acide sulfamique et de 45 cm³ de mélange réactif réducteur (fer phosphorique H₃PO₄/Fe SO₄), en agitant à faible vitesse pendant 1 min ;
- introduction de 10 cm³ de réactif oxydant (molybdate) en agitant plus vivement (une coloration brune apparaît ; la solution doit redevenir vert clair dans les 40 secondes qui suivent) ;
- poursuivre l'agitation pendant environ 2 min 30, puis laisser reposer 30 secondes ;
- introduction d'un mélange de dilution (5 cm³ de sulfate de vanadyle et 100 cm³ d'eau distillée) en agitant fortement ;
- introduire le titrant (bichromate de potassium) environ 60 secondes plus tard.

Il est important de noter que toutes ces opérations doivent être effectuées afin que l'arrivée au point d'inflection correspondant à la fin du dosage se situe dans les 4 min qui suivent la dilution du milieu réactionnel.

La mise en oeuvre de ce procédé dans l'installation selon l'invention impose donc de pouvoir introduire dans le bécher 10 situé au poste de travail de l'acide sulfamique par le premier tube 14, le mélange réactif réducteur par le deuxième tube 16, le réactif oxydant par le troisième tube 18, le mélange de dilution par le quatrième tube 20 et le titrant par le cinquième tube 22 en forme de cathéter. A ces tubes 14, 16, 18, 20 et 22 d'arrivée de réactifs, de diluant et de titrant sont associés le tube 24 d'amenée de liquide de rinçage et de vidange du récipient et l'électrode 26.

L'agitation de la solution contenue dans le bécher 10 qui se trouve au poste de travail est assurée par un agitateur électromagnétique 28 associé à un barreau magnétique 30 placé dans le fond du bécher.

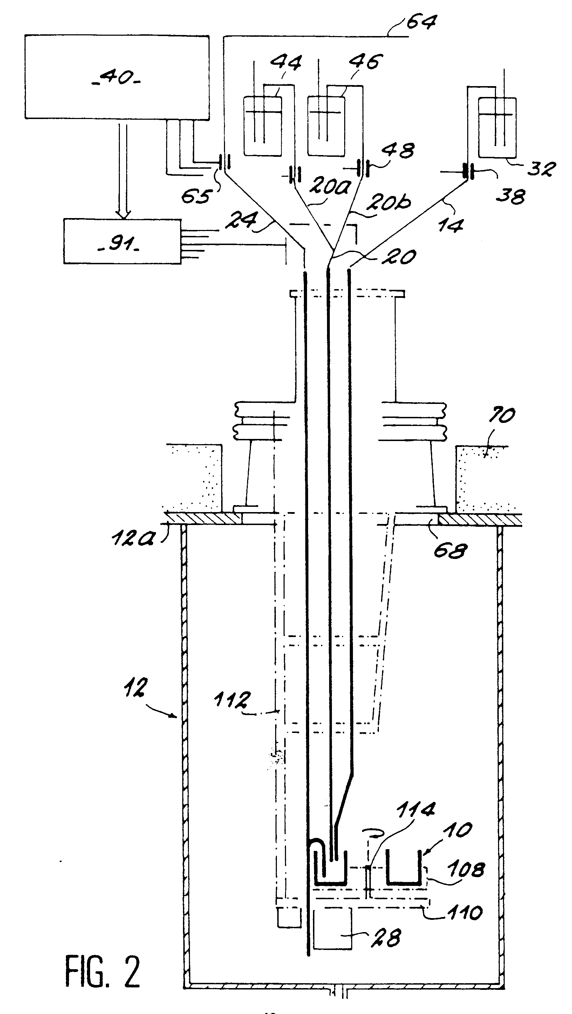

Chacun des tubes 14, 16 et 18 plonge par son extrémité opposée à celle qui est située à l'intérieur de l'enceinte 12 dans un bidon de distribution 32, 34 et 36 respectivement, situé à l'extérieur de l'enceinte 12 et contenant respectivement de l'acide sulfamique, le mélange réactif réducteur et le mélange réactif oxydant. Une électrovanne normalement fermée, telle qu'illustrée en 38 sur la figure 2 pour le tube 14, est placée à la sortie de chacun des bidons 32, 34 et 36, dans chacun des tubes 14, 16 et 18. Ces électrovannes sont pilotées par un ordinateur central de gestion 40 programmé de façon à mettre en oeuvre le procédé de dosage désiré.

Comme l'illustre la figure 1, le mélange réactif réducteur contenu dans le bidon 34 est préchauffé entre ce bidon et l'électrovanne correspondante, par un système de préchauffage 42, à une température d'environ 50°C, afin que le milieu réactionnel soit à une température d'environ 35°C lors de la destruction de l'excès de réducteur. Le système de préchauffage 42 peut notamment être constitué par un bain thermostatique dans lequel le fer phosphorique est préchauffé par circulation dans un récipient double enveloppe en verre.

Le tube 20 par lequel est introduite la solution de dilution comporte quant à lui, à l'extérieur de l'enceinte 12, deux branches 20a et 20b dont les extrémités plongent respectivement dans un bidon 44 contenant du sulfate de vanadyle et dans un bidon 46 contenant de l'eau distillée. Chacune des branches 20a et 20b du tube 20 est également équipée d'une électrovanne normalement fermée 48,49 (figure 2), dont l'ouverture est commandée de façon programmée par l'ordinateur central de gestion 40.

Afin que l'ouverture de l'une quelconque des électrovannes, telles que les électrovannes 38,48 et 49 placées dans les différents tubes de distribution 14, 16, 18 et dans les branches 20a et 20b du tube 20 se traduisent par une injection du réactif ou du produit correspondant, les différents bidons 32, 34, 36, 44 et 46 contenant ces réactifs et ces produits sont mis sous pression par un circuit d'air comprimé (non représenté). Seuls les tubes 50, 52, 54, 56 et 58 de ce circuit d'air comprimé, qui débouchent respectivement en haut de chacun des bidons 32,34,36,44 et 46 ont été représentés sur la figure 1.

Le tube 22 formant cathéter, par lequel est amené le titrant, est relié à l'extérieur de l'enceinte 12 à une électro-burette 60 pilotée par l'ordinateur central de gestion 40. Cette électro-burette 60 permet notamment de contrôler la vitesse d'introduction du titrant, en agissant sur le relais d'un robinet automatique (non représenté) équipant la burette. Des impulsions représentatives du volume de titrant écoulé sont transmises en retour à l'ordinateur.

Comme l'illustre aussi de façon schématique la figure 1, un tube 62 d'amenée d'un liquide de rinçage tel que de l'eau est branché en dérivation sur le tube 22 formant cathéter, de façon à permettre le rinçage de la partie de ce tube débouchant dans l'enceinte 12, lorsque le titrant a été introduit au moyen de l'électro-burette 60. L'introduction de liquide de rinçage par le tube 62 est contrôlée par une électrovanne (non représentée) pilotée par l'ordinateur central de gestion 40. A son extrémité opposée, le tube 62 est raccordé sur un circuit 64 d'amenée d'eau déminéralisée.

Le tube 24 d'amenée de liquide de rinçage et de vidange du bécher 10 est également raccordé, à l'extérieur de l'enceinte 12, sur le circuit 64 d'amenée d'eau déminéralisée. En aval de son raccordement sur le circuit 64, le tube 24 comporte également une électrovanne 65 (figure 2), normalement fermée, pilotée par l'ordinateur central de gestion 40.

L'électrode de mesure 26 est reliée directement à l'ordinateur central de gestion 40 par un câble électrique 66. Elle permet de mesurer en permanence l'évolution du potentiel de la solution contenue dans le bécher 10 qui se trouve au poste de travail, par comparaison avec une électrode de référence (non représentée) située à l'extérieur de l'enceinte 12.

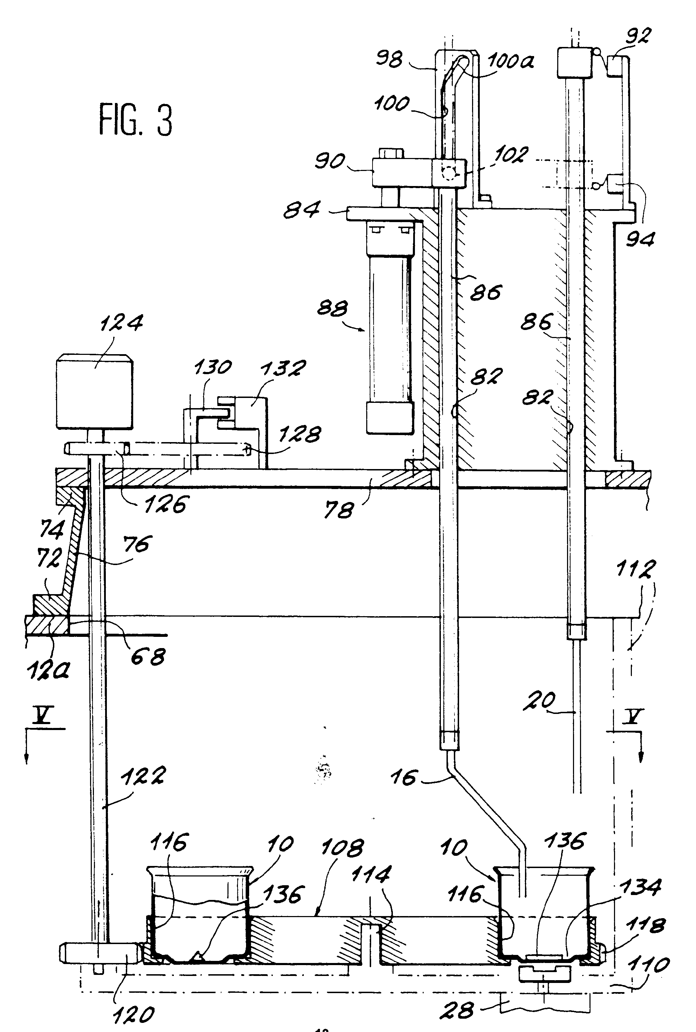

Dans la pratique et comme l'illustrent plus précisément les figures 2 à 4, la partie mécanique de l'installation de dosage illustrée schématiquement sur la figure 1 est implantée sur la paroi supérieure 12a de l'enceinte 12. Une ouverture rectangulaire 68 est ménagée à cet effet dans la paroi supérieure 12a, ainsi que dans le blindage 70 (figure 2) qui surplombe cette paroi. Une bride inférieure 72 (figure 3) ayant la forme de l'ouverture 68 est fixée de façon étanche sur la paroi supérieure 12a, par des moyens (non représentés) tels que des vis. Une bride supérieure 74, située au-dessus de la face supérieure du blindage 70, est solidarisée de la bride inférieure 72 par une cheminée 76.

Une plaque de supportage horizontale 78 repose sur la bride supérieure 74 et en est solidarisée de façon étanche par des moyens de fixation (non représentés) tels que des vis. Sur cette plaque 78 est également fixé de façon étanche, par exemple au moyen de vis (non représentées) un corps massif 80 traversé par sept alésages verticaux 82 dont deux seulement apparaissent sur la figure 3. Des vis ou tout autre mode de fixation (non représenté) permettent de fixer sur la face supérieure du corps 80 une plaque horizontale 84.

Une rampe coulissante 86 est reçue dans chacun des alésages 82 formés dans le corps 80 et traverse également les plaques 78 et 84. Chacune de ces rampes 86 supporte selon son axe une partie droite et verticale de l'un des tubes 14, 16, 18, 20, 22 ou 24 ou encore l'électrode 26. Chaque rampe 86 peut être déplacée dans l'alésage 82 correspondant entre une position haute et une position basse par des moyens de commande constitués par un vérin hydraulique 88 à double effet dont le corps est fixé sous la plaque 84 et dont la tige de commande verticale fait saillie au-dessus de la plaque 84 pour être reliée par son extrémité supérieure à l'extrémité supérieure de la rampe 86 correspondante par un étrier 90, comme l'illustre la figure 3. Comme on l'a représenté globalement sous la référence 91 sur la figure 2, chacune des deux chambres de chaque vérin hydraulique 88 est reliée par une conduite à une interface hydropneumatique, par l'intermédiaire d'un réducteur de débit, et chaque interface hydropneumatique communique avec un circuit d'air comprimé par l'intermédiaire d'une électrovanne pilotée par l'ordinateur central de gestion 40.

Un changement de position de l'électrovanne associée à l'un quelconque des vérins 88, sous l'action de l'ordinateur central de gestion 40, permet, selon le cas, soit de faire descendre la rampe 86 correspondante afin d'injecter un produit ou un réactif dans le bécher 10 qui se trouve au poste de travail, soit au contraire de faire remonter cette rampe après l'introduction dans le bécher du produit ou du réactif correspondant.

Comme on l'a représenté très schématiquement pour l'une des rampes 86 sur la figure 3, les positions extrèmes haute et basse de chacune des rampes 86 sont repérées par deux capteurs optoélectroniques 92 et 94 montés sur un support 96 fixé sur la face supérieure de la plaque 84. Chacun des capteurs tels que 92 et 94 est relié à l'ordinateur central de gestion 40.

Lorsqu'un signal de présence de l'extrémité supérieure de la rampe 86 correspondante est envoyé par l'un ou l'autre des capteurs 92 et 94 vers l'ordinateur central de gestion 40, l'électrovanne correspondant au vérin 88 associé à cette rampe est amenée dans une position neutre dans laquelle le vérin est maintenu dans la position qu'il occupe.

Pour le bon déroulement du procédé de dosage mis en oeuvre à l'aide de l'installation représentée sur les figures, il est essentiel que certains réactifs ne puissent pas être introduits à contre temps dans le bécher 10 situé au poste de travail. En particulier, il est impératif que des gouttes du mélange réactif réducteur tel que le fer phosphorique délivré par le tube 16 ou des gouttes du réactif oxydant tel que le molybdate introduit par le tube 18 ne puissent pas chuter dans le bécher 10 en dehors des périodes pendant lesquelles ces réactifs doivent y être introduits.

A cet effet, l'installation selon l'invention comporte des moyens qui permettent de décaler automatiquement l'extrémité inférieure des tubes 16 et 18 afin qu'ils ne se trouvent pas au-dessus du bécher 10 situé au poste de travail, lorsque les rampes 86 supportant chacun de ces tubes se trouvent en position haute.

Dans la pratique, ces moyens permettent de faire pivoter automatiquement les rampes 86 correspondantes autour de leurs axes propres lorsqu'elles se rapprochent de leur position haute. En effet, pour des raisons d'encombrement qui apparaissent notamment sur la figure 5, les axes verticaux des extrémités inférieures des tubes d'arrivée des produits, à l'exception de l'axe du tube 20 d'amenée des produits de dilution, sont décalés latéralement par rapport aux axes des rampes 86 supportant les parties droites de ces tubes. Le pivotement des rampes 86 supportant les tubes 16 et 18, lorsque ces rampes arrivent en position haute, a donc pour effet d'amener l'extrémité inférieure de chacun de ces tubes dans une position décalée latéralement par rapport à l'enveloppe extérieure du bécher 10 situé au poste de travail.

Afin de réaliser le pivotement des deux rampes 86 portant les tubes 16 et 18, on monte les rampes 86 rotatives sur les étriers 90 et on fixe sur la face supérieure de la plaque 84 deux pièces de guidage 98 présentant chacune, en section horizontale, la forme d'un arc de cercle centré sur l'axe de la rampe 86 correspondante. Dans chacune des pièces 98 est usinée une fente oblongue incurvée 100 formant came, dans laquelle est reçu un doigt 102 qui fait saillie radialement vers l'extérieur à partir de l'extrémité supérieure de la rampe 86 correspondante. Chacune des fentes 100 est orientée parallèlement à l'axe de la rampe 86 correspondante sur la majeure partie de sa hauteur, à l'exception de sa partie supérieure 100a qui est inclinée en forme d'hélice pour provoquer le pivotement désiré de la rampe 86 portant le tube 16 ou 18, lorsque cette rampe approche de sa position haute. Avantageusement, le doigt 102 est muni d'un galet (non représenté), afin de réduire les frottements.

Comme l'illustre schématiquement la figure 1, la partie basse de chacun des tubes 14, 16, 18 et 22 présente sensiblement la forme d'un Z couché, de telle sorte que l'extrémité inférieure en soit décalée latéralement par rapport à la partie droite reçue dans la rampe 86 correspondante. Par ailleurs, l'extrémité inférieure du tube 20, qui est rectiligne, est raccordée sur une rampe en forme de T 104 (figure 1) facilitant la dilution du mélange introduit par ce tube.

En ce qui concerne la partie inférieure du tube 24 d'amenée de liquide de rinçage et de vidange du récipient, elle présente la forme d'un h dont la branche courte dérivée 24a est de longueur inférieure à celle de la branche longue rectiligne 24b. Par ailleurs, la branche rectiligne 24b comporte une restriction 106 immédiatement en dessous du raccordement de la branche dérivée 24a sur cette branche rectiligne. La présence de cette restriction 106 permet un écoulement préférentiel de l'eau de rinçage vers la branche dérivée 24a qui plonge dans le bécher 10 situé au poste de travail, lorsque la rampe 86 correspondante est en position basse.

Grâce à cet agencement, une ouverture de courte durée de l'électrovanne placée dans le tube 24 permet la vidange du bécher 10 par amorçage du siphon formé entre les branches 24a et 24b. Le rinçage du bécher 10 peut ensuite être obtenu en ouvrant l'électrovanne plus longuement, afin d'éjecter du liquide de rinçage dans le bécher par la branche dérivée 24a.

Bien que le poste de travail puisse être un poste fixe prévu à l'intérieur de l'enceinte 12, l'installation comporte avantageusement des moyens permettant de faire défiler à ce poste plusieurs béchers 10, afin que le procédé de dosage de l'uranium puisse être mis en oeuvre, de façon automatisée,successivement sur chacune des solutions contenues dans les béchers.

Dans le mode de réalisation illustré notamment sur les figures 1, 3 et 5, le défilement des béchers est assuré par un plateau horizontal tournant 108. Comme l'illustre très schématiquement la figure 2, ce plateau 108 est supporté par un bras horizontal 110 formé à l'extrémité inférieure d'une potence verticale 112 fixée, par exemple au moyen de vis (non représentées) à la plaque de supportage 78 (figure 3). De façon plus précise, le bras horizontal 110 porte un axe vertical 114 sur sa face supérieure et le plateau 108 est monté sur cet axe 114 de façon à pouvoir tourner librement.

Comme l'illustrent en particulier les figures 3 et 5, le plateau 108 présente sur sa face supérieure quatre alvéoles 116, de section horizontale circulaire, constituant des réceptacles pour quatre béchers 10. Les alvéoles 116 sont régulièrement réparties autour de l'axe de rotation du plateau 108, à 90° les unes des autres.

Pour permettre le défilement de chacun des béchers 10 placés dans les alvéoles 116 au poste de travail situé approximativement à la verticale en dessous du corps massif 80, le plateau 108 comporte à sa périphérie une couronne dentée 118 sur laquelle est en prise un pignon 120 supporté par un arbre d'entraînement vertical 122, selon un agencement qui apparaît notamment sur la figure 3. La partie haute de l'arbre d'entraînement 122 traverse de façon étanche la plaque de supportage 78, afin d'être entraînée par un ensemble moteur-réducteur 124. Le moteur de l'ensemble 124 est un moteur électrique à courant continu qui est piloté par l'ordinateur central de gestion, lorsqu'un cycle de dosage suivi des opérations de vidange et de rinçage du bécher est terminé.

L'arbre 122 de sortie de l'ensemble 124 entraîne également, au-dessus de la plaque 78, un pignon 126 qui est en prise sur un engrenage 128 entraînant en rotation un repère 130. A chaque tour, ce repère 130 passe devant un capteur optoélectronique 132 monté sur la plaque 78.

Les rapports de réduction existant d'une part entre le pignon 120 et la couronne dentée 118, d'autre part entre le pignon 126 et l'engrenage 128 sont choisis de telle sorte qu'à une rotation d'un tour du repère 130 corresponde une rotation d'un quart de tour du plateau 108. Ainsi, à chaque fois que le repère 130 passe devant le capteur 132, le plateau 108 a tourné d'un quart de tour.

L'information de présence du repère 130 en face du capteur optoélectronique 132 est transmise à l'ordinateur central de gestion 40 qui stoppe automatiquement l'ensemble moteur-réducteur 124. Un nouveau bécher 10 se trouve alors au poste de travail en dessous du corps massif 80 et un nouveau cycle de dosage peut être initié.

Sur les figures 2 et 3, on voit que l'agitateur électromagnétique 28 est monté sur le bras horizontal 110, de telle sorte que son axe vertical soit aligné avec l'axe du bécher 10 qui se trouve au poste de travail.

Comme le fait apparaître la vue plus détaillée de la figure 3, les béchers 10 comportent avantageusement dans leur fond un logement circulaire 134. Ce logement circulaire est formé, selon l'axe du bécher, par un décalage vers le bas de la partie centrale plane du fond par rapport à sa partie périphérique plane.

Pour assurer l'agitation de la solution contenue dans le bécher 10, un barreau magnétique 136 est placé dans ce logement circulaire 134. Avantageusement et comme on l'a représenté sur la partie gauche de la figure 3, ce barreau magnétique 136 présente une section triangulaire. Bien entendu, les barreaux magnétiques 136 sont mis en place par un opérateur dans chacun des béchers 10, avant que ceux-ci n'arrivent en face du poste de travail sous l'effet de la rotation du plateau 108.

La description qui précède, qui concerne une installation destinée en particulier à effectuer le dosage de l'uranium en présence de plutonium et de produits de fission, en phase aqueuse ou organique, selon la méthode de Davies et Gray, permet de faire apparaître les différents avantages présentés par cette installation, notamment en ce qui concernent les dispositions permettant d'éviter une chute inopinée de réactifs dans le bécher contenant la solution en cours de dosage et en ce qui concernent les dispositions relatives à la vidange et au rinçage du bécher lorsque le dosage est terminé.

On comprendra aisément que ces avantages subsistent quelles que soient les réactions chimiques qui sont réalisées au poste de travail et quels que soient les produits en cause. De ce point de vue, on observera que l'installation selon l'invention permet de réaliser toute suite de réactions chimiques dans un bécher, indépendamment du fait que ce dernier soit initialement vide ou non. Par ailleurs, dans une version simplifiée d'une telle installation, la mise en place des béchers ou des récipients correspondants au poste de travail peut être effectuée manuellement par l'opérateur ou par des moyens de transfert différents du plateau rotatif décrit, tels qu'un transporteur pas à pas. En outre, il est clair que lorsque les réactions chimiques effectuées concernent des produits ne nécessitant pas de protections particulières, l'installation selon l'invention peut être utilisée en dehors de toute enceinte de confinement. Enfin, on observera que les moyens décrits permettant de faire tourner les rampes supportant les tubes de distribution des réactifs lorsque ceux-ci remontent dans leur position inactive peuvent être remplacés par tout moyen techniquement équivalent tel qu'un système de rails ou de cames.

## Revendications

1. Installation pour effectuer plusieurs réactions chimiques successives, à l'intérieur d'un même récipient, comprenant :
- un poste de travail prévu pour recevoir un récipient (10);
- au moins deux tubes (14,16,18,20,22,24) d'arrivée de produits, chaque tube ayant une extrémité inférieure qui débouche au-dessus du poste de travail et une deuxième extrémité qui débouche dans un bidon de distribution (32,34,36) contenant un produit à distribuer ;
caractérisée par le fait qu'elle comprend de plus :
- des moyens de commande (88) aptes à déplacer l'extrémité inférieure de chacun des tubes entre une position haute, inactive et une position basse d'injection de produit ; et
- des moyens formant came (100,102) pour déplacer l'extrémité inférieure d'au moins un tube (16,18) dans une direction latérale par rapport au récipient (10), lors d'un actionnement des moyens de commande (88) afin que cette extrémité inférieure soit placée dans le récipient lorsque ledit tube (16,18) est dans sa position basse d'injection de produit, et soit décalée latéralement par les moyens formant came (100,102), par rapport au récipient (10), lors d'un déplacement dudit tube (16,18) vers sa position haute, inactive, assuré par les moyens de commande (88).

2. Installation selon la revendication 1, caractérisée par le fait que ledit tube (16,18) comporte une partie droite d'axe vertical, apte à coulisser et à tourner dans un support (80,98), l'extrémité inférieure de ce tube étant décalée par rapport audit axe vertical, et les moyens formant came comprenant des moyens (100,102) pour faire pivoter le premier tube (16,18) autour dudit axe vertical.

3. Installation selon la revendication 2, caractérisée par le fait que les moyens pour faire pivoter ledit tube comprennent un doigt (102) solidaire de ladite partie droite de ce dernier, reçu dans une fente incurvée (100) formée dans le support (80,98).

4. Installation selon l'une quelconque des revendications précédentes, caractérisée par le fait qu'elle comprend des moyens de défilement (108) pour présenter à tour de rôle plusieurs récipients (10) au poste de travail, au-dessus duquel se trouvent les extrémités inférieures desdits tubes (14,16).

5. Installation selon la revendication 4, caractérisée par le fait que lesdits moyens de défilement comprennent un plateau horizontal (108) muni d'alvéoles (116) de réception des récipients, régulièrement réparties autour d'un axe vertical, et des moyens d'entraînement (124) pour faire tourner séquentiellement le plateau autour dudit axe lorsque lesdites réactions chimiques successives sont terminées pour un récipient (10).

6. Installation selon l'une quelconque des revendications précédentes, caractérisée par le fait qu'elle comprend un agitateur électromagnétique (28) placé sous le récipient (10) et un barreau magnétique (136) placé dans un logement circulaire (134) formé dans le fond du récipient.

7. Installation selon la revendication 6, caractérisée par le fait que le barreau magnétique (136) a une section triangulaire.

8. Installation selon l'une quelconque des revendications précédentes, caractérisée par le fait qu'elle comprend de plus une électrode (26) verticale de contrôle des réactions chimiques, agencée en faisceau avec lesdits tubes (14,16,18,20,22,24) et sur laquelle agissent également lesdits moyens de commande (88).

9. Installation selon l'une quelconque des revendications précédentes, caractérisée par le fait que lesdits tubes comprennent un tube (24) d'amenée de liquide de rinçage et de vidange du récipient, comportant à son extrémité inférieure une rampe en forme de h, dont une branche courte dérivée (24a) pénètre dans le récipient et dont une branche longue rectiligne (24b) extérieure au récipient, comporte un rétrécissement (106) en dessous du raccordement de la branche courte.

10. Installation selon l'une quelconque des revendications précédentes, caractérisée par le fait que lesdits tubes comprennent un tube (20) d'amenée d'eau de dilution, comportant une rampe de distribution (104) en forme de T à son extrémité inférieure.

11. Installation selon l'une quelconque des revendications précédentes, caractérisée par le fait qu'elle comprend de plus une centrale de gestion (40) permettant d'effectuer de façon automatisée lesdites réactions chimiques successives, en pilotant lesdits moyens de commande (88) et des moyens (38,48) pour distribuer les produits à l'intérieur des tubes.

12. Installation selon l'une quelconque des revendications précédentes, caractérisée par le fait que le récipient (10) est placé dans une enceinte de confinement étanche (12) dont une paroi supérieure (12a) est munie d'une plaque (78) que traversent de façon étanche lesdits tubes (14,16,18,20,22,24) d'arrivée de produits, cette plaque supportant une potence (112) porte récipients, à l'intérieur de l'enceinte, et les moyens de commande (88) à l'extérieur de l'enceinte.

## Patentansprüche

1. Anlage zur Durchführung mehrerer, aufeinanderfolgender chemischer Reaktionen innerhalb desselben Behälters, bestehend aus:
- einem Arbeitsplatz für die Aufnahme eines Behälters (10);
- mindestens zwei Rohren (14, 16, 18, 20, 22, 24) fürdie Zufuhr von Produkten, wobei jedes Rohr ein unteres Ende besitzt, das oberhalb des Arbeitsplatzes ausläuft, sowie ein zweites Ende, das in einen Verteilerbehälter (32, 34, 36) mündet, der das zu verteilende Produkt enthält; die dadurch gekennzeichnet ist, daß sie ferner
- Verstellvorrichtungen (88) enthält, die dazu geeignet sind, das untere Ende eines jeden Rohres zwischen einer oberen, inaktiven Stellung und einer unteren Stellung für das Einspritzen eines Produktes zu verschieben;
- über Vorrichtungen in Form einer Stiftführung (100,102) verfügt, die geeignet sind zur Verschiebung des unteren Endes mindestens einer der genannten Rohre (16, 18) in seitlicher Richtung in bezug auf den Behälter (10), bei Betätigung der Verstellvorrichtung (88) zur Verschiebung des genannten unteren Endes, wenn sich das genannte Rohr (16, 18) in der unteren Stellung zur Produkteinspritzung befindet, und zur seitlichen Verschiebung durch die Vorrichtungen, die die Stiftführung (100, 102) bilden, in bezug auf den Behälter (10) bei einer Verschiebung des genannten Rohres (16, 18) in seine obere, inaktive Stellung mit Hilfe der Verstellvorrichtungen (88).

2. Anlage nach Anspruch 1, dadurch gekennzeichnet, daß das genannte Rohr (16, 18) einen geraden Abschnitt längs der Vertikalachse umfaßt, der in einer Halterung (80, 98) verschoben und gedreht werden kann, wobei das untere Ende dieses Rohres in bezug auf die genannte Vertikalachse verstellt wird; ferner dadurch gekennzeichnet, daß die Vorrichtungen, aus der die Stiftführung besteht, weitere Vorrichtungen (100, 102) enthalten, mit denen das genannte Rohr (16, 18) um die genannte Vertikalachse geschwenkt werden kann.

3. Anlage nach Anspruch 2, dadurch gekennzeichnet, daß die Vorrichtungen zum Drehen des genannten Rohres aus einem Stift (102) bestehen, der fest mit dem genannten geraden Abschnitt des genannten Rohres verbunden ist, und der auf einer in der Halterung (80, 98) befindlichen, gekrümmten Aussparung (100) aufliegt.

4. Anlage nach einem der zuvor genannten Ansprüche, dadurch gekennzeichnet, daß sie eine Abfülldrehvorrichtung (108) umfaßt, mit der mehrere Behälter (10) am Arbeitsplatz vorbeigeführt werden, über dem sich die unteren Enden der genannten Rohre (14, 16) befinden.

5. Anlage nach Anspruch 4, dadurch gekennzeichnet, daß die genannten Abfülldrehvorrichtungen aus einer horizontalen Platte (108) bestehen, die mit Vertiefungen zur Aufnahme der Behälter (116) versehen ist, wobei diese um eine vertikale Achse verteilt sind; ferner aus Antriebsvorrichtung (124) zum fortlaufenden Drehen der Platte um die genannte vertikale Achse, sobald die genannten aufeinanderfolgenden chemischen Reaktionen für einen Behälter (10) beendet sind.

6. Anlage nach einem der zuvor genannten Ansprüche, die dadurch gekennzeichnet ist, daß sie über ein unterhalb des Behälters (10) angebrachtes, elektromagnetisches Rührwerk (28) sowie über einen in einer kreisförmigen Auflage (134) angeordneten Magnetstab (136) verfügt, der sich im Boden des Behälters befindet.

7. Anlage nach Anspruch 6, dadurch gekennzeichnet, daß der Magnetstab (136) einen dreieckigen Querschnitt aufweist.

8. Anlage nach einem der zuvor genannten Ansprüche, die dadurch gekennzeichnet ist, daß sie ferner über eine vertikale Elektrode (26) zur Steuerung der chemischen Reaktionen verfügt, die zusammen mit den genannten Rohren (14, 16, 18, 20, 22, 24) im selben Strang angeordnet ist und auf die die genannten Verstellvorrichtungen (88) gleichermaßen wirken.

9. Anlage nach einem der zuvor genannten Ansprüche, dadurch gekennzeichnet, daß der genannte Rohrstrang ein Zuflußrohr (24) zum Spülen und Entleeren des Behälters umfaßt, das eine h-förmige Rampe enthält, wobei die kurze Abzweigleitung (24a) in den Behälter hineinführt und der lange, geradlinige Abzweig (24b) an der Außenseite des Behälters eine Verengung (106) unterhalb der Verbindungsstelle mit dem kurzen Abzweig aufweist.

10. Anlage nach einem der zuvor genannten Ansprüche, dadurch gekennzeichnet, daß der genannte Rohrstrang ein Zuflußrohr (20) für Wasser zum Verdünnen umfaßt, das an seinem äußeren Ende über eine T-förmige Verteilungsrampe (104) verfügt.

11. Anlage nach einem der zuvor genannten Ansprüche, die dadurch gekennzeichnet ist, daß sie ferner eine Leiteinrichtung (40) umfaßt, die den automatischen Ablauf der genannten aufeinanderfolgenden chemischen Reaktionen ermöglicht, indem sie die genannten Verstellvorrichtungen (88) sowie die Vorrichtungen (38, 48) zur Verteilung der Produkte innerhalb der Rohre steuert.

12. Anlage nach einem der zuvor genannten Ansprüche, dadurch gekennzeichnet, daß der Behälter (10) in einer Sicherheitsummantelung (12) angeordnet ist, dessen obere Wandung (12a) mit einer Platte (78) versehen ist, die die genannten Rohre (14, 16, 18, 20, 22, 24) für die Produktzufuhr dicht umschließt, wobei diese Platte innerhalb der Ummantelung den Stützbalken (112) des Behälters und außerhalb der Ummantelung die Verstellvorrichtungen (88) trägt.

## Claims

1. Installation for performing several successive chemical reactions within the same container comprising a working station for receiving a container (10) and at least two product supply tubes (14,16,18,20,22,24), each tube having a lower end issuing above the working station and a second end issuing into a distribution drum (32,34,36) containing a product to be distributed, characterized in that it also comprises control means (88) able to displace the lower end of each of the tubes between a top, inactive position and a bottom product injecting position and means forming a cam (100,102) for displacing the lower end of at least one tube (16,18) in a lateral direction with respect to the container (10), during an actuation of the control means (88), so that said lower end is placed in the container when said tube (16,18) is in its lower, product injection position and is laterally displaced by means forming a cam (100,102), with respect to the container (10), during a displacement of said tube (16,18) towards its upper, inactive position, ensured by the control means (88).

2. Installation according to claim 1, characterized in that said tube (16,18) has a straight, vertically axed portion able to slide and rotate in a support (80,98), the lower end of said tube being displaced with respect to said vertical axis and the means forming a cam incorporate means (100,102) for pivoting the first tube (16,18) about said vertical axis.

3. Installation according to claim 2, characterized in that the means for pivoting the said tube comprise a pawl (102) integral with the said straight portion of the latter and received in an inwardly curved slot formed in the support (80,98).

4. Installation according to any one of the preceding claims, characterized in that it comprises moving means (108) for presenting in turn several containers (10) to the working station above which are located the lower ends of said tubes (14,16).

5. Installation according to claim 4, characterized in that the moving means comprise a horizontal table (108) equipped with cavities (116) for receiving the containers, which are regularly distributed about a vertical axis, as well as driving means (124) for sequentially rotating the table about said axis, when said successive chemical reactions have been finished for a particular container (10).

6. Installation according to any one of the preceding claims, characterized in that it comprises an electromagnetic stirrer (28) positioned beneath the container (10) and a magnetic bar (136) placed in a circular recess (134) formed in the bottom of the container.

7. Installation according to claim 6, characterized in that the magnetic bar (136) has a triangular cross-section.

8. Installation according to any one of the preceding claims, characterized in that it also comprises a vertical electrode (26) for checking the chemical reactions, arranged in bundle manner with the said tubes (14,16,18,20,22,24) and on which also act said control means (88).

9. Installation according to any one of the preceding claims, characterized in that said tubes comprise a container draining and rinsing liquid supply tube (24), with at its lower end a h-shaped ramp, whereof a short, branched-off branch (24a) enters the container and whereof a short, rectilinear branch (24b) outside the container has a narrowing (106) below the connection of the short branch.

10. Installation according to any one of the preceding claims, characterized in that said tubes comprise a diluting water supply tube (20) having a T-shaped distributing ramp (104) at its lower end.

11. Installation according to any one of the preceding claims, characterized in that it comprises a control station (40) making it possible to perform in an automated manner said successive chemical reactions, controlling the control means (88) and the means (38,48) for distributing the products within the tubes.

12. Installation according to any one of the preceding claims, characterized in that the container (10) is placed in a tight confinement enclosure (12), whereof an upper wall (12a) is provided with a plate (78) tightly traversed by said product supply tubes (14,16,18,20,22,24), said plate supporting a container-carrying beam (112) within the enclosure, together with control means (88) outside the enclosure.
